# EUROPEAN PATENT APPLICATION

(11) **EP 4 847 651 A1**
(43) Date of publication of application: **02.12.2026**
(21) Application number: 25769447.1
(22) Date of filing: 07.03.2025
(51) Int. Cl.: C22C 38/00, B21B 1/22, B23K 9/23, B23K 9/167, B23K 20/04, C21D 8/02, C22C 38/06, C22C 38/58

(54) **CLADDING STEEL PLATE, WELDED JOINT, AND METHOD FOR MANUFACTURING SAID CLADDING STEEL PLATE AND SAID WELDED JOINT**

(30) Priority: 12.03.2024 JP 2024037828
(71) Applicant: JFE Steel Corporation, Tokyo 100-0011 (JP)
(72) Inventor: IZUMI Daichi, Tokyo 100-0011 (JP); IMAYAMA Hikaru, Tokyo 100-0011 (JP); IKEDA Hiroshi, Tokyo 100-0011 (JP); SHIMAMURA Junji, Tokyo 100-0011 (JP)
(74) Representative: Hoffmann Eitle
(86) International application number: PCT/JP2025/008540
(87) International publication number: WO 2025/192476

(57) **Abstract**

Provided are: a high-strength clad steel plate and a welded joint that have high ammonia SCC resistance, high low-temperature toughness, and good bondability and that are suitable for tanks or the like for transporting or storing liquid ammonia; and methods for producing the clad steel plate and the welded joint.

The clad steel plate includes: a base metal having a predetermined chemical composition; and a cladding metal having a predetermined chemical composition and bonded to at least one surface (surface serving as an inner surface). The base metal has a tensile strength of 780 MPa or more, and the base metal has an absorbed energy of 47 J or more in a Charpy impact test at -40°C. The cladding metal has a maximum hardness of 210 HV or less. The bonding ratio between the base metal and the cladding metal is 70% or more.

## Description

### Technical Field

The present invention relates to a high-strength clad steel plate having low-temperature toughness and high stress corrosion cracking resistance, and to a welded joint including the high-strength clad steel plate. In particular, the present invention relates to a high-strength clad steel plate suitable for structural members, such as tanks, used in a liquid ammonia environment, and to a welded joint including the high-strength clad steel plate. The present invention also relates to methods for producing the high-strength clad steel plate and the welded joint.

### Background Art

In a liquid ammonia environment, carbon steel may undergo stress corrosion cracking caused by liquid ammonia (hereinafter referred to as ammonia SCC (stress corrosion cracking)). Therefore, steel materials having low ammonia SCC susceptibility have been used for carbon steel structures for handling liquid ammonia, such as piping, storage tanks, tank cars, and line pipes, and operational measures have also been taken to suppress ammonia SCC.

For example, ammonia SCC is known to correlate with the strength and hardness of a material. When carbon steel is used, a material having a tensile strength of less than 600 MPa is preferably used. Ammonia SCC is also known to occur in weld heat-affected zones. Accordingly, use of high-strength steel in a liquid ammonia environment requires measures, such as post-weld heat treatment by full annealing to adjust tensile strength and the hardness of welds.

In recent years, liquid ammonia has attracted attention as clean energy because liquid ammonia does not emit CO₂ during combustion, and liquid ammonia is expected to drive large-scale demand. Consequently, larger equipment to transport and store liquid ammonia is needed.

For larger tanks, use of high-strength steel is desired to reduce the thickness of steel materials used from the viewpoint of weight reduction and construction cost reduction.

For efficient operation of equipment for transportation and storage, the equipment may be used for both liquid ammonia and LPG. Since liquid ammonia and liquefied gases, such as LPG, are transported or stored at low temperatures, steel plates used for such applications are required to have high low-temperature toughness.

A method for achieving both such high strength and high ammonia SCC resistance is disclosed in Patent Literature 1. Patent Literature 1 describes a method for softening the surface of a steel material.

### Citation List

### Patent Literature

PTL 1: Japanese Examined Patent Application Publication No. 55-30062

### Summary of Invention

### Technical Problem

However, the method described in Patent Literature 1 requires heat treatment for a long time in order to soften the surface layer uniformly and sufficiently, and it is difficult to control the strength at the center of a steel plate. Therefore, there is a problem in terms of the strength of the steel plate.

An object of the present invention is to solve the above-described problem and to provide: a high-strength clad steel plate and a welded joint that have high ammonia SCC resistance, high low-temperature toughness, and good bondability and that are suitable for tanks or the like for transporting or storing liquid ammonia; and methods for producing the clad steel plate and the welded joint.

Whether ammonia SCC resistance is high is determined by the following procedure.

The clad steel plate according to the present invention is used such that the cladding metal comes into contact with ammonia or the like. Therefore, first, a test specimen measuring 1.5 to 3.0 mm in thickness × 15 mm × 115 mm is taken from a cladding metal portion by subjecting the clad steel plate to thickness reduction machining from the base metal side. When the cladding metal has a thickness of more than 3.0 mm, a test specimen having a thickness of 3.0 mm is taken from a surface of the cladding metal the surface of which is not bonded to the base metal. The obtained test specimen is subjected to ultrasonic degreasing in acetone for 5 minutes. A stress equivalent to 100% of the yield strength YS of the base metal corresponding to each test specimen is applied to the corresponding test specimen by four-point bending. The test specimen subjected to four-point bending is placed in a test cell. Subsequently, the test cell is filled with a solution prepared by mixing 2 L of liquid ammonia having a purity of 99.999% or more with ammonium carbamate: 5.00 mass%, O₂: 1.000 bar, and water: 0.10 mass%. Specifically, predetermined amounts of ammonium carbamate and water are placed in the test cell, O₂ gas is further blown into the test cell, and then liquid ammonia is placed in the test cell. The solution volume to specimen area ratio, which is the ratio of the volume of the immersion liquid to the surface area of the immersion test specimen, is 42 mL/cm². Stirring during the test is continuously performed at 10 rpm using a stirrer placed in the test cell. The temperature of the test liquid is set to 25°C. After the temperature of the test liquid is adjusted to 25°C, the corrosion potential of the test specimen is measured using a potentiostat. Measurement of the potential and application of the potential using the potentiostat are performed by a three-electrode method, and platinum electrodes are used as both a reference electrode and a counter electrode. When one hour has elapsed from the start of measurement of the corrosion potential, the potential is determined to have stabilized, and, at that time, the potential applied to the test specimen is controlled to be +0.5 V vs. Pt, and the immersion test is started. After 504 hours have elapsed from the start of the immersion test, the test specimen is taken out of the test cell. Corrosion products on the surface of the test specimen are removed, and cracking is visually observed on the surface and in the cross section of the specimen to evaluate cracking. In the present invention, nine test specimens are used for each condition in the 504 hour-immersion test. When cracks having a depth of 1.5 mm or more are observed in two or fewer test specimens among the nine test specimens, ammonia SCC resistance is determined to be good (○), namely, excellent; when such cracks occur in three or more test specimens, ammonia SCC resistance is determined to be poor (×).

Good low-temperature toughness means that the absorbed energy is 47 J or more in a Charpy impact test at -40°C in accordance with JIS Z 2242 (2023).

Good bondability means that, in the cross section including the base metal and the cladding metal, the bonding ratio represented by the following formula is 70% or more. Bonding ratio (%): 100 × bonding interface length (mm)/total measurement length (mm)

High strength means that the base metal has a tensile strength (TS) of 780 MPa or more as measured in accordance with JIS Z 2241 (2022).

### Solution to Problem

In order to achieve the above object, the inventors of the present invention have conducted intensive studies on various factors affecting the ammonia SCC resistance, low-temperature toughness, and strength properties of a steel plate. As a result, the inventors of the present invention have obtained the following finding.

Specifically, ammonia SCC occurs on the inner side of products (tanks), and the ammonia SCC resistance is mainly governed by the properties of a steel plate surface layer on the inner side. Therefore, the inventors of the present invention have conceived of producing a clad steel plate in which a steel plate having high strength and high low-temperature toughness is used as a base metal, and a steel plate having high ammonia SCC resistance is bonded to the base metal as a cladding metal.

The inventors of the present invention have found that such a clad steel plate provides high ammonia SCC resistance, high low-temperature toughness, and good strength properties.

Since the base metal and the cladding metal used in the present invention are both carbon steels, alloy costs and production costs in the present invention may be significantly reduced compared with those for a clad steel plate in which stainless steel or a nonferrous alloy is used as the cladding metal.

The present invention has been accomplished on the basis of the above finding. Specifically, the gist of the present invention is as described below.
[1] A clad steel plate including a cladding metal on at least one surface of a base metal,
   wherein the base metal has a chemical composition containing:
   in mass%,
      C: 0.030% to 0.150%,
      Si: 0.05% to 0.55%,
      Mn: 0.50% to 2.10%,
      P: 0.020% or less,
      S: 0.010% or less,
      Al: 0.018% to 0.070%,
      Ni: 0.30% to 2.20%,
      Ti: 0.005% to 0.020%,
      N: 0.0020% to 0.0080%, and
      O (oxygen): 0.0050% or less,
      with Ti/N being 2.2 or more and 6.5 or less, and the base metal further containing one or two or more selected from:
         Cu: 0.50% or less,
         Cr: 1.60% or less,
         Mo: 0.60% or less,
         Nb: 0.030% or less,
         V: 0.100% or less,
         B: 0.0050% or less, and
         Ca: 0.0040% or less,
         with the balance being Fe and unavoidable impurities; and
         the cladding metal has a chemical composition containing: in mass%,
         C: 0.030% to 0.140%,
         Mn: 0.20% to 1.60%,
         P: 0.020% or less,
         S: 0.010% or less,
         Al: 0.018% to 0.070%,
         N: 0.0020% to 0.0050%, and
         O (oxygen): 0.0050% or less, with the balance being Fe and unavoidable impurities; and
         the base metal has a tensile strength of 780 MPa or more,
         the base metal has an absorbed energy of 47 J or more in a Charpy impact test at -40°C,
   the cladding metal has a maximum hardness of 210 HV or less, and
      a bonding ratio between the base metal and the cladding metal is 70% or more.
[2] The clad steel plate according to [1], wherein the chemical composition of the cladding metal further contains: in mass%,
   one or two or more selected from:
   Si: 0.55% or less,
   Cu: 0.30% or less,
   Ni: 0.30% or less,
   Cr: 0.10% or less,
   Mo: 0.10% or less,
   Ti: 0.020% or less,
   Nb: 0.030% or less,
   V: 0.050% or less, and
   Ca: 0.0040% or less.
[3] A welded joint comprising the clad steel plate according to [1] or [2],
   wherein a weld heat-affected zone has an absorbed energy of 47 J or more in a Charpy impact test at -40°C, and
   a weld heat-affected zone of the cladding metal has a maximum hardness of 210 HV or less.
[4] A method for producing the clad steel plate according to [1] or [2], the method including:
   heating a slab for the raw material of the base metal to a surface temperature of 900°C or more and 1200°C or less, and then hot-rolling the heated slab for the raw material of the base metal at a rolling finish temperature of 700°C or more in terms of surface temperature to obtain a raw material of base metal;
   heating a slab for the raw material of the cladding metal and then hot-rolling the heated slab for the raw material of the cladding metal to obtain a raw material of cladding metal;
   heating, to a surface temperature of 1000°C or more and 1250°C or less, an assembled slab obtained by stacking the raw material of the base metal and the raw material of the cladding metal;
   then hot-rolling the heated assembled slab at a cumulative rolling reduction ratio of 60% or more and at a rolling finish temperature equal to or higher than the Ar₃ transformation temperature and equal to or lower than 1000°C to produce a rolled plate including the base metal and the cladding metal; and
   performing a treatment (A) or (B) below on the rolled plate:
      (A) cooling the rolled plate after hot rolling,
         then reheating the rolled plate to 800°C or more and 1000°C or less,
         subjecting the rolled plate to accelerated cooling from a temperature equal to or higher than the Ar₃ transformation temperature of the base metal to a cooling stop temperature of 350°C or less at an average cooling rate in a range of 1.0°C/s or more and 20.0°C/s or less, and
         then tempering the rolled plate at a temperature of 550°C or more and 700°C or less after the accelerated cooling; or
      (B) subjecting the rolled plate after hot rolling to accelerated cooling from a temperature equal to or higher than the Ar₃ transformation temperature of the base metal to a cooling stop temperature of 500°C or less at an average cooling rate in a range of 3°C/s or more and 50°C/s or less, with or without subsequent tempering the rolled plate at a temperature of 700°C or less.
[5] A welded joint production method for producing a welded joint by performing welding using the clad steel plate according to [1] or [2] under a condition of a heat input of 50 kJ/cm or less.

### Advantageous Effects of Invention

The present invention can provide a high-strength clad steel plate that has high ammonia SCC resistance, high low-temperature toughness, and good bondability and that is suitable for structural members, such as tanks, used in a liquid ammonia environment.

### Description of Embodiments

The present invention is a clad steel plate having, on at least one surface of a base metal, a cladding metal composed of carbon steel. Specifically, the clad steel plate of the present invention includes a base metal and a cladding metal formed on at least one surface of the base metal.

Since the clad steel plate of the present invention has high ammonia SCC resistance and high low-temperature toughness, the clad steel plate of the present invention is suitable for structural members, such as tanks, used in a liquid ammonia environment. However, such an environment is not limited to liquid ammonia, and may be a liquefied gas, such as LPG or liquefied CO₂.

In the present invention, a surface having such a cladding metal may be located on either side of the base metal but is located on at least the side that comes into contact with ammonia or the like described above when used as the clad steel plate. Locating the cladding metal on the ammonia-contacting side contributes to achieving the ammonia SCC resistance and low-temperature toughness of the clad steel plate. In the present invention, the surface on the side that comes into contact with ammonia or the like is also referred to as an inner surface. The present invention is not limited only to a slab assembly produced by stacking a base metal slab (a raw material for a base metal) and a cladding metal slab (a raw material for a cladding metal). For example, a slab assembly may be produced by adding elements to one or both surfaces of such a base metal slab in a gas atmosphere to form a surface region of the chemical composition of the cladding metal.

Embodiments of the present invention will be described below in more detail.

A clad steel plate according to the present invention includes a cladding metal on at least one surface of a base metal, wherein the base metal has a chemical composition containing: in mass%, C: 0.030% to 0.150%, Si: 0.05% to 0.55%, Mn: 0.50% to 2.10%, P: 0.020% or less, S: 0.010% or less, Al: 0.018% to 0.070%, Ni: 0.30% to 2.20%, Ti: 0.005% to 0.020%, N: 0.0020% to 0.0080%, and O (oxygen): 0.0050% or less, with Ti/N being 2.2 or more and 6.5 or less, and the base metal further containing one or two or more selected from: Cu: 0.50% or less, Cr: 1.60% or less, Mo: 0.60% or less, Nb: 0.030% or less, V: 0.100% or less, B: 0.0050% or less, and Ca: 0.0040% or less, with the balance being Fe and unavoidable impurities; and
the cladding metal has a chemical composition containing: in mass%, C: 0.030% to 0.140%, Mn: 0.20% to 1.60%, P: 0.020% or less, S: 0.010% or less, Al: 0.018% to 0.070%, N: 0.0020% to 0.0050%, and O (oxygen): 0.0050% or less, with the balance being Fe and unavoidable impurities; and
the base metal has a tensile strength of 780 MPa or more, the base metal has an absorbed energy of 47 J or more in a Charpy impact test at -40°C, the cladding metal has a maximum hardness of 210 HV or less, and the bonding ratio between the base metal and the cladding metal is 70% or more.
Unless otherwise specified, the unit "%" indicating the content of each component element described below means "mass%."

### (1) Chemical Composition of Base Metal

### C: 0.030% to 0.150%

C is the most effective element for increasing the strength of a steel plate produced by cooling according to the present invention. To obtain this effect, the C content is specified to be 0.030% or more. From the viewpoint of reducing the contents of other alloying elements and enabling lower-cost production, the C content is preferably 0.040% or more.

When the C content exceeds 0.150%, the toughness and weldability of the steel plate deteriorate. Accordingly, the C content is specified to be 0.150% or less. From the viewpoint of toughness, the C content is preferably 0.140% or less.

### Si: 0.05% to 0.55%

Si is added to improve the strength of the steel plate and is also added for deoxidization. To obtain such effects, the Si content is specified to be 0.05% or more. The Si content is more preferably 0.07% or more.

When the Si content exceeds 0.55%, toughness and weldability deteriorate. Accordingly, the Si content is specified to be 0.55% or less. The Si content is preferably 0.50% or less.

### Mn: 0.50% to 2.10%

Mn is an element having an effect of increasing the hardenability of steel and is one of the important elements that are required to be added to achieve high strength as in the present invention. To obtain such effects, the Mn content is specified to be 0.50% or more. From the viewpoint of reducing the contents of other alloying elements and enabling lower-cost production, the Mn content is preferably 0.70% or more.

When the Mn content exceeds 2.10%, weldability deteriorates. Accordingly, the Mn content is specified to be 2.10% or less. The Mn content is preferably 1.90% or less.

### P: 0.020% or Less

P is an element contained as an unavoidable impurity and exerts adverse effects such as reducing toughness and weldability by segregating at grain boundaries. Therefore, the P content is preferably as low as possible, but a P content of 0.020% or less is acceptable.

The lower limit of the P content is not limited and may be 0%. Since P is normally an element unavoidably contained in steel as an impurity, the P content may industrially exceed 0%. Since an excessive reduction leads to an increase in refining cost, the P content is preferably 0.001% or more.

### S: 0.010% or Less

S is an element contained as an unavoidable impurity. S is present in steel as sulfide inclusions, such as MnS, and exerts adverse effects such as reducing the toughness of the steel plate by serving as fracture initiation sites. Therefore, the S content is preferably as low as possible, but an S content of 0.010% or less is acceptable.

The lower limit of the S content is not limited and may be 0%. S is normally an element unavoidably contained in steel as an impurity; therefore, the S content may industrially exceed 0%. Since an excessive reduction leads to an increase in refining cost, the S content is preferably 0.001% or more from the viewpoint of cost.

### Al: 0.018% to 0.070%

Al acts as a deoxidizing agent. To obtain such an effect, the Al content is specified to be 0.018% or more.

When the Al content exceeds 0.070%, oxide inclusions increase, and cleanliness decreases, resulting in degraded toughness. Accordingly, the Al content is specified to be 0.070% or less. From the viewpoint of preventing deterioration in toughness, the Al content is preferably 0.060% or less.

### Ni: 0.30% to 2.20%

Ni is not only effective for improving the strength of the steel plate, but also has an effect of improving the toughness of the base metal and weld heat-affected zones. However, when the Ni content is less than 0.30%, such effects are insufficient; when the Ni content exceeds 2.20%, surface flaws occur in the steel plate. Accordingly, the Ni content is specified to be in the range of 0.30% to 2.20%. The Ni content is preferably 0.60% or more, and more preferably 0.70% or more. The Ni content is preferably 2.10% or less.

### Ti: 0.005% to 0.020%

Ti is an element that has a strong tendency to form nitrides and has an effect of reducing solute N by fixing N. Therefore, addition of Ti may improve the toughness of welds. To obtain such effects, the Ti content is required to be 0.005% or more.

When the Ti content exceeds 0.020%, toughness rather decreases. Accordingly, the Ti content is specified to be in the range of 0.005% to 0.020%. The Ti content is preferably 0.008% or more. The Ti content is preferably 0.017% or less.

### N: 0.0020% to 0.0080%

N may improve the toughness of welds by forming TiN. To obtain such an effect, the N content is required to be 0.0020% or more.

When the N content exceeds 0.0080%, toughness rather decreases. Accordingly, the N content is specified to be in the range of 0.0020% to 0.0080%. The N content is preferably 0.0025% or more. The N content is preferably 0.0070% or less.

### O (Oxygen): 0.0050% or Less

O is an element contained as an unavoidable impurity. O is present in steel as oxides, such as Al₂O₃, and exerts adverse effects such as reducing the toughness of the steel plate by serving as fracture initiation sites. Therefore, the O content is preferably as low as possible, but an O content of 0.0050% or less is acceptable.

The lower limit of the O content is not limited and may be 0%. O is normally an element unavoidably contained in steel as an impurity; therefore, the O content may industrially exceed 0%. Since an excessive reduction leads to an increase in refining cost, the O content is preferably 0.0005% or more from the viewpoint of cost.

### Ti/N: 2.2 or More and 6.5 or Less

Formation of TiN may improve the toughness of welds. To obtain such an effect, the correlation between the Ti content and the N content is important. When Ti/N, which is the ratio of the Ti content to the N content, is less than 2.2 or more than 6.5, crystal grains coarsen, and toughness deteriorates. Accordingly, the ratio Ti/N is specified to be in the range of 2.2 or more and 6.5 or less. The ratio Ti/N is preferably 2.3 or more. The ratio Ti/N is preferably 3.9 or less, and more preferably 3.8 or less.

In addition to the above-described components in the base metal of the present invention, the base metal further contains one or two or more of the elements described below, with the balance being Fe and unavoidable impurities. The unavoidable impurities mean impurities that are unavoidably introduced from raw materials, production processes, production equipment, or the like, and may be contained to the extent that they do not impair the object of the present invention. Examples of the raw materials include iron ore, reduced iron, and scrap. Examples of the impurities include Co, Sn, Zn, Pb, As, Sb, Bi, H, and REM.

### Cu: 0.50% or Less

Cu is an element effective for improving the strength of the steel plate. However, when the Cu content is less than 0.05%, such an effect is insufficient. Therefore, the Cu content is preferably 0.05% or more. The Cu content is more preferably 0.10% or more.

When the Cu content exceeds 0.50%, surface flaws occur in the steel plate. Accordingly, when Cu is contained, the Cu content is 0.50% or less. The Cu content is preferably 0.45% or less.

### Cr: 1.60% or Less

Cr is an element effective for improving the strength of the steel plate. However, when the Cr content is less than 0.05%, such an effect is insufficient. Therefore, the Cr content is preferably 0.05% or more. The Cr content is more preferably 0.10% or more.

When the Cr content exceeds 1.60%, the toughness of the steel plate deteriorates. Accordingly, when Cr is contained, the Cr content is specified to be 1.60% or less. The Cr content is preferably 1.50% or less.

### Mo: 0.60% or Less

Mo is an element effective for improving the strength of the steel plate. However, when the Mo content is less than 0.05%, such an effect is insufficient. Therefore, the Mo content is preferably 0.05% or more. The Mo content is preferably 0.10% or more.

When the Mo content exceeds 0.60%, the toughness of the steel plate deteriorates. Accordingly, when Mo is contained, the Mo content is 0.60% or less. The Mo content is preferably 0.55% or less.

### Nb: 0.030% or Less

Nb is an element that has an effect of improving toughness by precipitating as carbonitrides and thus reducing the prior austenite grain size. To obtain such an effect, the Nb content is preferably 0.005% or more. The Nb content is more preferably 0.007% or more.

When the Nb content exceeds 0.030%, a large amount of NbC precipitates, and toughness decreases. Accordingly, when Nb is contained, the Nb content is 0.030% or less. The Nb content is preferably 0.027% or less.

### V: 0.100% or Less

V is an element effective for improving the strength of the steel plate. However, when the V content is less than 0.005%, such an effect is insufficient. Therefore, the V content is preferably 0.005% or more. The V content is more preferably 0.030% or more.

When the V content exceeds 0.100%, the toughness of the steel plate deteriorates. Accordingly, when V is contained, the V content is 0.100% or less. The V content is preferably 0.090% or less.

### B: 0.0050% or Less

B is an element effective for improving the strength of the steel plate. However, when the B content is less than 0.0005%, such an effect is insufficient. Therefore, the B content is preferably 0.0005% or more. The B content is more preferably 0.0008% or more.

When the B content exceeds 0.0050%, the toughness of the steel plate deteriorates. Accordingly, when B is contained, the B content is 0.0050% or less. The B content is preferably 0.0040% or less.

### Ca: 0.0040% or Less

Ca is an element that has an effect of suppressing formation of MnS and the like, which elongate in the rolling direction, by combining with S. In other words, addition of Ca allows shape control of sulfide inclusions such that the sulfide inclusions have a spherical shape, and Ca may improve the toughness of welds and the like. To obtain such an effect, the Ca content is preferably 0.0005% or more. The Ca content is preferably 0.0010% or more. When the Ca content exceeds 0.0040%, the cleanliness of steel decreases. Accordingly, when Ca is contained, the Ca content is 0.0040% or less. The Ca content is preferably 0.0030% or less.

### (2) Chemical Composition of Cladding Metal

### C: 0.030% to 0.140%

C is an element that increases the hardness of the steel plate. As the hardness increases, the liquid ammonia SCC susceptibility increases. Accordingly, the C content of the cladding metal is specified to be 0.140% or less. The C content is preferably 0.130% or less.

The C content of the cladding metal is preferably as low as possible, but an excessive reduction leads to an increase in refining cost. Therefore, the C content is specified to be 0.030% or more. The C content is preferably 0.040% or more.

### Mn: 0.20% to 1.60%

Mn is an element having an effect of increasing the hardenability of steel. Therefore, when the Mn content increases excessively, the hardness of the steel plate becomes excessively high. An excessive increase in the hardness of the steel plate leads to deterioration in ammonia SCC susceptibility. Accordingly, the Mn content is specified to be 1.60% or less. The Mn content is preferably 1.55% or less.

Reducing the Mn content to less than 0.20% requires considerable cost, and therefore the Mn content is specified to be 0.20% or more. The Mn content is preferably 0.30% or more.

### P: 0.020% or Less

P is an element contained as an unavoidable impurity and exerts adverse effects such as reducing toughness and weldability by segregating at grain boundaries. Therefore, the P content is preferably as low as possible, but a P content of 0.020% or less is acceptable.

The lower limit of the P content is not limited and may be 0%. Since P is normally an element unavoidably contained in steel as an impurity, the P content may industrially exceed 0%. Since an excessive reduction leads to an increase in refining cost, the P content is preferably 0.001% or more.

### S: 0.010% or Less

S is an element contained as an unavoidable impurity. S is present in steel as sulfide inclusions, such as MnS, and exerts adverse effects such as reducing the toughness of the steel plate by serving as fracture initiation sites. Therefore, the S content is preferably as low as possible, but an S content of 0.010% or less is acceptable.

The lower limit of the S content is not limited and may be 0%. S is normally an element unavoidably contained in steel as an impurity; therefore, the S content may industrially exceed 0%. Since an excessive reduction leads to an increase in refining cost, the S content is preferably 0.0003% or more from the viewpoint of cost.

### Al: 0.018% to 0.070%

Al acts as a deoxidizing agent. To obtain such an effect, the Al content is specified to be 0.018% or more. The Al content is preferably 0.020% or more.

When the Al content exceeds 0.070%, oxide inclusions increase, and cleanliness decreases, resulting in degraded toughness. Accordingly, the Al content is specified to be 0.070% or less.

### N: 0.0020% to 0.0050%

N is an element that increases the hardness of the steel plate. As the hardness increases, the liquid ammonia SCC susceptibility increases. Accordingly, the N content of the cladding metal is specified to be 0.0050% or less. The N content is preferably 0.0045% or less.

The N content of the cladding metal is preferably as low as possible, but an excessive reduction leads to an increase in refining cost. Therefore, the N content is specified to be 0.0020% or more. The N content is preferably 0.0025% or more.

### O (Oxygen): 0.0050% or Less

O (oxygen) is an element contained as an unavoidable impurity. O is present in steel as oxides, such as Al₂O₃, and exerts adverse effects such as reducing the toughness of the steel plate by serving as fracture initiation sites. Therefore, the O content is preferably as low as possible, but an O content of 0.0050% or less is acceptable. The lower limit of the O content is not limited and may be 0%. O is normally an element unavoidably contained in steel as an impurity; therefore, the O content may industrially exceed 0%. Since an excessive reduction leads to an increase in refining cost, the O content is preferably 0.0005% or more from the viewpoint of cost.

In addition to the above-described components in the cladding metal of the present invention, the cladding metal may further contain, as necessary, the following components. The balance is Fe and unavoidable impurities. The unavoidable impurities mean impurities that are unavoidably introduced from raw materials, production processes, production equipment, or the like, and may be contained to the extent that they do not impair the object of the present invention. Examples of the raw materials include iron ore, reduced iron, and scrap. Examples of the impurities include Co, Sn, Zn, Pb, As, Sb, Bi, H, and REM.

One or Two or More Selected From: in Mass%, Si: 0.55% or Less, Cu: 0.30% or Less, Ni: 0.30% or Less, Cr: 0.10% or Less, Mo: 0.10% or Less, Ti: 0.020% or Less, Nb: 0.030% or Less, V: 0.050% or Less, and Ca: 0.0040% or Less

Si, Cu, Ni, Cr, Mo, and V may improve the strength of the steel plate. To obtain such an effect, the Si content, the Cu content, the Ni content, the Cr content, the Mo content, and the V content are preferably specified to be 0.05% or more, 0.05% or more, 0.05% or more, 0.05% or more, 0.05% or more, and 0.005% or more, respectively.

An excessive Si content results in deterioration in weldability. Accordingly, when Si is contained, the Si content is 0.55% or less. Excessive contents of Cu, Ni, Cr, Mo, and V increase hardness and are also disadvantageous from the viewpoint of alloy cost. Therefore, when Cu is contained, the Cu content is 0.30% or less; when Ni is contained, the Ni content is 0.30% or less; when Cr is contained, the Cr content is 0.10% or less; when Mo is contained, the Mo content is 0.10% or less; and when V is contained, the V content is 0.050% or less. The V content is preferably 0.030% or less.

Ti and Nb may further improve the toughness of the steel plate. To obtain such an effect, the Ti content and the Nb content are preferably each specified to be 0.005% or more.

Excessive addition of Ti and Nb increases hardness and is also disadvantageous from the viewpoint of alloy cost. Therefore, when Ti is added, the Ti content is 0.020% or less; and when Nb is added, the Nb content is 0.030% or less.

Ca is an element that has an effect of suppressing formation of MnS and the like, which elongate in the rolling direction, by combining with S. In other words, addition of Ca allows shape control of sulfide inclusions such that the sulfide inclusions have a spherical shape, and Ca may improve the toughness of welds and the like. To obtain such an effect, the Ca content is preferably 0.0005% or more.

When the Ca content exceeds 0.0040%, the cleanliness of steel decreases. Accordingly, when Ca is added, the Ca content is 0.0040% or less. The Ca content is more preferably 0.0010% or more. The Ca content is preferably 0.0030% or less. The Ca content is more preferably 0.0020% or less.

### (3) Properties of Clad Steel Plate

### [Tensile Strength]

In the clad steel plate of the present invention, the base metal has a tensile strength of 780 MPa or more. The upper limit of the tensile strength is not limited, but the high-strength steel plate of the present invention may have a tensile strength of 930 MPa or less.

### [Absorbed Energy in Charpy Impact Test]

In the clad steel plate of the present invention, the base metal has an absorbed energy of 47 J or more in a Charpy impact test at -40°C. When the clad steel plate is used as a structural member, such as a tank, PWHT (post weld heat treatment) is performed; however, PWHT may not be performed depending on the plate thickness. In such a case, the base metal is required to have a higher absorbed energy, and the absorbed energy of the base metal is preferably 100 J or more, and more preferably 170 J or more.

### [Maximum Hardness]

In the clad steel plate of the present invention, the cladding metal has a maximum hardness of 210 HV or less.

The presence of a high-hardness region in a surface layer portion of the clad steel plate promotes ammonia SCC. Specifically, when the cladding metal has a hardness of more than 210 HV, the intended ammonia SCC resistance cannot be obtained.

### [Bonding Ratio]

In the clad steel plate, there are portions in which oxides or voids are interposed between the base metal and the cladding metal, and portions in which the base metal and the cladding metal are directly bonded to each other. The bonding strength between the base metal and the oxides and the bonding strength between the cladding metal and the oxides are both lower than the bonding strength between the base metal and the cladding metal. Therefore, when the bonding ratio between the base metal and the cladding metal increases, the bonding strength of the clad steel plate increases, and then disbonding is less likely to occur during processing of the clad steel plate into a product. In the clad steel plate of the present invention, the bonding ratio between the base metal and the cladding metal is 70% or more. The bonding ratio between the base metal and the cladding metal is preferably 80% or more, and more preferably 85% or more. The upper limit of the bonding ratio between the base metal and the cladding metal is not limited, and the bonding ratio is preferably as high as possible and may be 100%.

### [Plate Thickness and Cladding Ratio]

The clad steel plate of the present invention may have a plate thickness of 7 mm or more. The plate thickness of the clad steel plate of the present invention is preferably 18 mm or more, and more preferably 23 mm or more. The clad steel plate of the present invention may have a plate thickness of 66 mm or less. The plate thickness of the clad steel plate of the present invention is preferably 53 mm or less, more preferably 48 mm or less, and even more preferably 41 mm or less.

The base metal of the clad steel plate of the present invention may have a plate thickness of 6 mm or more. The plate thickness of the base metal of the clad steel plate of the present invention is preferably 15 mm or more, and more preferably 20 mm or more. The base metal of the clad steel plate of the present invention may have a plate thickness of 60 mm or less. The plate thickness of the base metal is preferably 50 mm or less, more preferably 45 mm or less, and even more preferably 38 mm or less.

The cladding metal of the clad steel plate of the present invention may have a plate thickness of 1.0 mm or more. The plate thickness of the cladding metal of the clad steel plate of the present invention is preferably 2.0 mm or more, and more preferably 2.5 mm or more. The cladding metal of the clad steel plate of the present invention may have a plate thickness of 6.0 mm or less. The plate thickness of the cladding metal of the clad steel plate of the present invention is preferably 5.0 mm or less, and more preferably 4.0 mm or less.

The clad steel plate of the present invention may have a cladding ratio of 0.01 or more. The cladding ratio of the clad steel plate of the present invention is preferably 0.03 or more, and more preferably 0.05 or more. The clad steel plate of the present invention may have a cladding ratio of 0.50 or less. The cladding ratio of the clad steel plate of the present invention is preferably 0.40 or less, and more preferably 0.30 or less.

### (4) Welded Joint

In the present invention, a structure such as a tank is produced by welding the clad steel plate described above. The type of welding is not limited, and a steel plate welding method known in the related art may be used; TIG welding is preferred.

In the welded joint, the weld heat-affected zone preferably has an absorbed energy of 47 J or more in a Charpy impact test at -40°C.

In the welded joint, the weld heat-affected zone of the cladding metal preferably has a maximum hardness of 210 HV or less.

### [Heat Input: 50 kJ/cm or Less]

When a welded joint is produced using the clad steel plate of the present invention, the heat input is specified to be 50 kJ/cm or less. The heat input is preferably 30 kJ/cm or less. The heat input is more preferably 20 kJ/cm or less. By satisfying this heat input range, the properties described above may be achieved. The lower limit of the heat input is not limited. Since an excessive reduction in the heat input leads to a decrease in welding efficiency, the heat input is preferably 5.0 kJ/cm or more.

### (5) Production Conditions

In the present invention, first, a slab for the raw material of the base metal and a slab for the raw material of the cladding metal, each having the corresponding chemical composition described above, are produced. The method for producing these material slabs is not limited, and a slab production method known in the related art may be used. Specifically, molten steels adjusted by an ordinary steelmaking method (a converter method or an electric arc furnace method) to have the respective chemical compositions described above are cast by an ordinary casting method (a continuous casting method or an ingot casting method) to obtain material slabs.

Next, the obtained slab for the raw material of the base metal is heated to a surface temperature of 900°C or more and 1200°C or less, and then hot-rolled. The hot-rolling finish temperature is 700°C or more in terms of surface temperature, and a raw material of the base metal having predetermined dimensions is obtained. The obtained slab for the raw material of the cladding metal is heated and then hot-rolled to obtain a raw material of the cladding metal having predetermined dimensions.

### [Heating Temperature: 900°C or More and 1200°C or Less]

When the heating temperature of the slab for the raw material of the base metal in the clad steel plate of the present invention is less than 900°C, insufficient carbide dissolution results in a failure to reach the required strength. Accordingly, the heating temperature is 900°C or more in terms of surface temperature. The heating temperature is preferably 920°C or more.

When the slab for the raw material of the base metal is heated at a temperature of more than 1200°C, energy consumption increases. Accordingly, the heating temperature is 1200°C or less in terms of surface temperature. The heating temperature is preferably 1150°C or less.

### [Rolling Finish Temperature (FT: Finishing Temperature): 700°C or More]

When the rolling finish temperature in the hot rolling is less than 700°C, formed ferrite is affected by working, and therefore toughness deteriorates. Accordingly, the rolling finish temperature is 700°C or more in terms of surface temperature. The rolling finish temperature is preferably 750°C or more.

The upper limit is not limited; however, the rolling finish temperature is preferably 1000°C or less in terms of surface temperature.

Next, a clad material is formed by stacking at least two layers including the obtained raw material of base metal and the raw material of the cladding metal on a surface of the raw material of the base metal to be in contact with ammonia or the like, or three layers including a dummy material, the raw material of the cladding metal, and the raw material of the base metal, or even four layers including the raw material of the base metal, the raw material of the cladding metal, another raw material of cladding metal, and another raw material of base metal. The clad material is then pressure-bonded and subjected to appropriate heat treatment for microstructure control.

In the tables in Examples described below, a slab stacking method in which the base metal slab, the cladding metal slab, the cladding metal slab, and the base metal slab are stacked in the stated order from the top, or a slab stacking method in which the cladding metal slab, the base metal slab, the base metal slab, and the cladding metal slab are stacked in the stated order from the top is referred to as a sandwich method. A method in which the cladding metal slab and the base metal slab are stacked in the stated order from the top, or a method in which the base metal slab and the cladding metal slab are stacked in the stated order from the top is referred to as an open method. A method in which a dummy material, the cladding metal slab, and the base metal slab are stacked in the stated order from the top, or a method in which the base metal slab, the cladding metal slab, and a dummy material are stacked in the stated order from the top is referred to as a dummy material method.

A clad slab (assembled slab) obtained by stacking the raw material(s) of the base metal and the raw material(s) of the cladding metal is heated to a temperature range of 1000°C or more and 1250°C or less, and the clad slab is then hot-rolled. In the hot rolling in the present invention, the cumulative rolling reduction ratio is 60% or more, and the rolling finish temperature is equal to or higher than the Ar₃ transformation temperature and equal to or lower than 1000°C. After the clad slab is hot-rolled, the rolled plate is subjected to the following treatment (A) or (B).
(A) The rolled plate after hot rolling is cooled, then reheated to 800°C or more and 1000°C or less, and subjected to accelerated cooling from a temperature equal to or higher than the Ar₃ transformation temperature of the base metal to a cooling stop temperature of 350°C or less at an average cooling rate in the range of 1.0°C/s or more and 20.0°C/s or less. After accelerated cooling, the rolled plate is tempered at a temperature of 550°C or more and 700°C or less.
   The reheating of the rolled plate to 800°C or more and 1000°C or less is carried out, for example, at an average heating rate of 1°C/s or more and 50°C/s or less.
(B) The rolled plate after hot rolling is subjected to accelerated cooling from a temperature equal to or higher than the Ar₃ transformation temperature of the base metal to a cooling stop temperature of 500°C or less at an average cooling rate in the range of 3°C/s or more and 50°C/s or less. Alternatively, the rolled plate which is subjected to the accelerated cooling and is then tempered at a temperature of 700°C or less.

### [Heating Temperature: 1000°C or More and 1250°C or Less]

When the heating temperature of the assembled slab obtained by stacking the raw material(s) of the base metal and the raw material(s) of the cladding metal is less than 1000°C, insufficient carbide dissolution results in a failure to reach the required strength. In addition, the heating temperature is preferably high from the viewpoint of bondability of clad steel. Accordingly, the heating temperature is 1000°C or more. The heating temperature is preferably 1020°C or more.

When the assembled slab is heated at a temperature of more than 1250°C, energy consumption increases. Accordingly, the heating temperature is 1250°C or less. The heating temperature is preferably 1230°C or less.

### [Cumulative Rolling Reduction Ratio of Assembled Slab: 60% or More]

Rolling of the assembled slab at a cumulative rolling reduction ratio of 60% or more promotes recrystallization of austenite, introduces deformation bands serving as nucleation sites into austenite grains, and refines bainite and martensite formed by transformation during subsequent accelerated cooling under the conditions described below to improve the toughness of the clad steel plate. Therefore, the cumulative rolling reduction ratio of the assembled slab is 60% or more. The cumulative rolling reduction ratio of the assembled slab is preferably 65% or more, and more preferably 70% or more. The upper limit of the cumulative rolling reduction ratio is not limited; however, from the viewpoint of rolling efficiency, the cumulative rolling reduction ratio is preferably 95% or less.

### [Rolling Finish Temperature (FT): Ar₃ Transformation Temperature or Higher and 1000°C or Less]

When the rolling finish temperature in the hot rolling is lower than the Ar₃ transformation temperature, ferrite formation degrades toughness. When the rolling finish temperature is lower than the Ar₃ transformation temperature, hot rolling at a low temperature degrades the bondability of the clad steel from the viewpoint of diffusion bonding. Accordingly, the rolling finish temperature is equal to or higher than the Ar₃ transformation temperature. The rolling finish temperature is preferably equal to or higher than the Ar₃ transformation temperature + 20°C.

When the rolling finish temperature exceeds 1000°C, deformation bands to serve as nucleation sites are not introduced into austenite grains, and neither fine bainite nor fine martensite is obtained, resulting in deterioration of the toughness of the clad steel plate. Accordingly, the rolling finish temperature is 1000°C or less. The rolling finish temperature is preferably 980°C or less.

### (Step (A) (Reheating and Subsequent Accelerated Cooling Step))

In the step (A), the rolled plate is then cooled, subsequently reheated to 800°C or more and 1000°C or less, and subjected to accelerated cooling from a temperature equal to or higher than the Ar₃ transformation temperature of the base metal to a cooling stop temperature of 350°C or less at an average cooling rate in the range of 1.0°C/s or more and 20.0°C/s or less. The phrase "from a temperature equal to or higher than the Ar₃ transformation temperature of the base metal" means that the surface temperature of the base metal at the start of accelerated cooling is equal to or higher than the Ar₃ transformation temperature of the base metal. After the hot rolling, the cooling before reheating may be performed to room temperature (-5°C to 50°C). The cooling rate in this cooling is not necessarily specified, but may be, for example, 0.01°C/s to 1°C/s in natural cooling.

### [Reheating Temperature: 800°C or More and 1000°C or Less]

When the reheating temperature of the rolled plate having the base metal and the cladding metal is less than 800°C, the strength may become excessive, and the toughness may not be restored. In addition, the bonding ratio may decrease. Accordingly, the reheating temperature is 800°C or more. The reheating temperature is preferably 820°C or more.

When the reheating temperature exceeds 1000°C, the strength may be insufficient. Accordingly, the reheating temperature is 1000°C or less. The reheating temperature is preferably 980°C or less.

### [Cooling Start Temperature: Ar₃ Transformation Temperature or Higher]

The steel plate after the reheating is cooled from a temperature equal to or higher than the Ar₃ transformation temperature of the base metal. The temperature equal to or higher than the Ar₃ transformation temperature of the base metal is requirement for the surface temperature of the base metal. When the start temperature of the cooling is lower than the Ar₃ transformation temperature of the base metal, ferrite is excessively formed and is present together with a martensite microstructure or bainite having a large strength difference from the ferrite. As a result, the base metal has insufficient strength and deteriorated toughness. Accordingly, the cooling start temperature after the reheating is equal to or higher than the Ar₃ transformation temperature. In addition, the cooling start temperature is preferably equal to or higher than the Ar₃ transformation temperature + 20°C. The Ar₃ transformation temperature may be determined from the following formula. 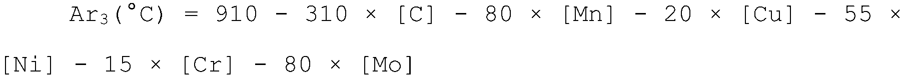 Ar3(°C) = 910 - 310 × [C] - 80 × [Mn] - 20 × [Cu] - 55 × [Ni] - 15 × [Cr] - 80 × [Mo]

In the formula, [M] represents the content (mass%) of element M in the steel plate (base metal) and is 0 (zero) for element M not contained.

### [Average Cooling Rate of Steel Plate: 1.0°C/s or More and 20.0°C/s or Less]

Cooling at an average cooling rate of 1.0°C/s or more is an essential process for producing a steel plate having high strength and high toughness. Cooling at a high rate provides a strength improving effect through transformation strengthening. When the average cooling rate is less than 1.0°C/s, the grain size of bainite or martensite may increase, and ferrite or pearlite may be formed, which may result in insufficient strength or deterioration in toughness. Accordingly, the average cooling rate is 1.0°C/s or more. The average cooling rate is preferably 1.5°C/s or more.

When the average cooling rate exceeds 20.0°C/s, the volume fraction of martensite becomes excessively high, and toughness may decrease. In addition, the bondability may decrease. Accordingly, the average cooling rate is 20.0°C/s or less. The average cooling rate is preferably 15.0°C/s or less.

The average cooling rate in the accelerated cooling is determined by dividing a difference (°C) between the cooling start temperature and the cooling stop temperature at a 1/2-thickness position in the plate thickness direction of a base metal steel plate by a cooling time (s).

The cooling start temperature and the cooling stop temperature at the 1/2-thickness position in the plate thickness direction of the base metal steel plate are obtained by measuring the temperature of the steel plate surface with a radiation thermometer and determining the temperature at the 1/2-thickness position by difference calculus. The cooling time refers to the period of time during which cooling water is supplied to the steel plate, and the cooling time is defined as the time required for the 1/2-thickness position to cool from the cooling start temperature to the cooling stop temperature.

### [Cooling Stop Temperature: 350°C or Less]

In the present invention, cooling under the conditions described above to a cooling stop temperature of 350°C or less after completion of reheating allows uniform formation of a predetermined volume fraction of bainite or martensite up to the center in the plate thickness of the base metal. When the cooling stop temperature exceeds 350°C, ferrite or pearlite microstructure is excessively formed, which results in insufficient strength or deterioration in toughness. Accordingly, the cooling stop temperature is specified to be 350°C or less. The cooling stop temperature is preferably 300°C or less.

The lower limit of the cooling stop temperature is not limited and may be room temperature. From the viewpoint of production efficiency or the like, the lower limit of the cooling stop temperature is preferably 100°C.

The cooled clad steel plate is then tempered at a temperature of 550°C or more and 700°C or less after being subjected to the accelerated cooling in the treatment of the step (A) to the cooling stop temperature.

### [Tempering Temperature: 550°C or More and 700°C or Less]

In the present invention, the clad steel plate is tempered for the purpose of restoration of the toughness of the base metal. When the average steel plate temperature (the temperature at the 1/2-thickness position of the steel plate) exceeds 700°C during reheating in the tempering, elimination or dispersion of dislocation may occur, and the strength of the base metal may decrease. Accordingly, the tempering temperature is 700°C or less. The tempering temperature is preferably 680°C or less.

When the average steel plate temperature is less than 550°C during reheating in the tempering, the base metal may have insufficient toughness. Accordingly, the tempering temperature is 550°C or more. The tempering temperature is preferably 600°C or more.

### (Step (B) (Accelerated Cooling Step))

In the step (B), the rolled plate is subjected to accelerated cooling from a temperature equal to or higher than the Ar₃ transformation temperature of the base metal to a cooling stop temperature of 500°C or less at an average cooling rate in the range of 3°C/s or more and 50°C/s or less. Alternatively, the rolled plate is subjected to the accelerated cooling as mentioned above and then tempered at a temperature of 700°C or less.

The phrase "from a temperature equal to or higher than the Ar₃ transformation temperature of the base metal" means that the surface temperature of the base metal at the start of accelerated cooling is equal to or higher than the Ar₃ transformation temperature of the base metal.

### [Cooling Start Temperature: Ar₃ Transformation Temperature or Higher]

When the cooling start temperature in the accelerated cooling is lower than the Ar₃ transformation temperature, subsequent ferrite formation degrades toughness. When the cooling start temperature in the accelerated cooling is lower than the Ar₃ transformation temperature, the bondability of the clad steel degrades from the viewpoint of diffusion bonding. Accordingly, the cooling start temperature in the accelerated cooling is equal to or higher than the Ar₃ transformation temperature. The cooling start temperature of the accelerated cooling is preferably equal to or higher than the Ar₃ transformation temperature + 20°C.

This cooling (accelerated cooling) is preferably performed immediately after the hot rolling, without natural cooling to room temperature or reheating the rolled plate to 800°C or more and 1000°C or less.

### [Average Cooling Rate of Steel Plate: 3°C/s or More and 50°C/s or Less]

Cooling at an average cooling rate of 3°C/s or more is an essential process for producing a steel plate having high strength and high toughness. Cooling at a high rate provides a strength improving effect through transformation strengthening. When the average cooling rate is less than 3°C/s, the grain size of bainite or martensite may increase, or ferrite or pearlite may be formed, which may result in insufficient strength or deterioration in toughness. Accordingly, the average cooling rate is 3°C/s or more. The average cooling rate is preferably 5°C/s or more, and more preferably 10°C/s or more.

When the average cooling rate exceeds 50°C/s, the volume fraction of martensite becomes excessively high, and toughness may decrease. In addition, the bonding ratio between the base metal and the cladding metal may decrease. Accordingly, the average cooling rate is 50°C/s or less. The average cooling rate is preferably 45°C/s or less. The average cooling rate in the accelerated cooling is determined by dividing a difference (°C) between the cooling start temperature and the cooling stop temperature at a 1/2-thickness position in the plate thickness direction of a base metal steel plate by a cooling time (s).

The cooling start temperature and the cooling stop temperature at the 1/2-thickness position in the plate thickness direction of the raw material of the base metal steel plate are obtained by measuring the temperature of the steel plate surface with a radiation thermometer and determining the temperature at the 1/2-thickness position by difference calculus. The cooling time refers to the period of time during which cooling water is supplied to the steel plate, and the cooling time is defined as the time required for the 1/2-thickness position to cool from the cooling start temperature to the cooling stop temperature.

### [Cooling Stop Temperature: 500°C or Less]

In the present invention, cooling under the conditions described above to a cooling stop temperature of 500°C or less allows uniform formation of a predetermined volume fraction of bainite or martensite up to the center in the plate thickness of the base metal. When the cooling stop temperature exceeds 500°C, ferrite or pearlite microstructure is excessively formed, which may result in insufficient strength or deterioration in toughness. Accordingly, the cooling stop temperature is specified to be 500°C or less. The cooling stop temperature is preferably 300°C or less. When the accelerated cooling step is followed by tempering described below, the cooling stop temperature is preferably 300°C or less, and more preferably 280°C or less.

The lower limit of the cooling stop temperature is not limited and may be room temperature. From the viewpoint of production efficiency or the like, the lower limit of the cooling stop temperature is preferably 150°C.

After being subjected to the accelerated cooling in the treatment of the step (B) to the cooling stop temperature, as necessary, the cooled clad steel plate may be then tempered at a temperature of 700°C or less. In other words, in the treatment of the step (B), the clad steel plate may not be tempered after the accelerated cooling described above, or may be tempered at a temperature of 700°C or less after the accelerated cooling.

### [Tempering Temperature: 700°C or Less]

In the present invention, the cooled clad steel plate may be tempered as necessary for the purpose of restoration of the toughness of the base metal. When the average steel plate temperature (the temperature at the 1/2-thickness position of the steel plate) exceeds 700°C during reheating in the tempering, elimination or dispersion of dislocation may occur, and the strength of the base metal may decrease. Accordingly, the tempering temperature is 700°C or less. The tempering temperature is preferably 680°C or less.

When the average steel plate temperature is less than 550°C during reheating in the tempering, the base metal may have insufficient toughness. Therefore, the tempering temperature is preferably 550°C or more. The tempering temperature is more preferably 600°C or more.

The temperature of the raw material of the steel plate or the clad steel plate in the present invention refers to the temperature at the 1/2-thickness position of the base metal. The temperature may be a value obtained, for example, by performing difference calculus using a process computer based on the temperature of the steel plate surface measured with a radiation thermometer.

The clad steel plate according to the present invention may be obtained by subjecting the material steel plates used for the base metal and the cladding metal and having the chemical compositions described above to the production conditions described above. The high-strength clad steel plate according to the present invention thus obtained has high low-temperature toughness, high stress corrosion cracking resistance, and good bondability.

In the production method according to the present invention, conventional methods may be used for any items not described in the present description.

### EXAMPLES

Table 1 shows the chemical composition of the base metal (the balance being Fe and unavoidable impurities). In the table, steel grades A to J and AA to AC are Inventive Examples within the scope of the present invention. Steel grades K to Z are Comparative Examples in which at least one component is outside the scope of the present invention.

Table 2 shows the chemical composition of the cladding metal (the balance being Fe and unavoidable impurities). In the table, steel grades a to i and t to v are Inventive Examples within the scope of the present invention. Steel grades j to s are Comparative Examples in which at least one component is outside the scope of the present invention.

Blank cells in Tables 1 and 2 indicate that the corresponding element is not contained or is contained as an unavoidable impurity.

**[Table 1]**

| Steel Grade | Chemical Composition (mass%) | | | | | | | | | | | | | | | | | |
|---|---|---|---|---|---|---|---|---|---|---|---|---|---|---|---|---|---|---|
| | C | Si | Mn | P | S | Al | Ni | Ti | N | O | Cu | Cr | Mo | Nb | V | B | Ca | Ti/N |
| A | 0.147 | 0.32 | 1.57 | 0.012 | 0.002 | 0.024 | 1.00 | 0.013 | 0.0034 | 0.0015 | 0.05 | 0.05 | 0.11 | | 0.041 | 0.0011 | | 3.8 |
| B | 0.035 | 0.07 | 2.02 | 0.004 | 0.001 | 0.041 | 0.97 | 0.011 | 0.0041 | 0.0009 | 0.34 | 1.45 | 0.05 | | | 0.0010 | | 2.7 |
| C | 0.109 | 0.25 | 0.89 | 0.003 | 0.001 | 0.038 | 0.77 | 0.012 | 0.0040 | 0.0017 | 0.18 | 0.48 | 0.42 | | 0.100 | 0.0050 | | 3.0 |
| D | 0.094 | 0.55 | 0.50 | 0.010 | 0.006 | 0.056 | 1.59 | 0.005 | 0.0022 | 0.0050 | 0.18 | 1.52 | 0.12 | | 0.055 | | | 2.3 |
| E | 0.072 | 0.20 | 1.22 | 0.002 | 0.001 | 0.018 | 2.20 | 0.009 | 0.0037 | 0.0031 | 0.50 | 0.49 | 0.53 | 0.027 | 0.045 | 0.0005 | | 2.4 |
| F | 0.131 | 0.14 | 1.05 | 0.005 | 0.001 | 0.044 | 0.86 | 0.011 | 0.0032 | 0.0026 | 0.20 | 0.47 | 0.40 | | 0.038 | 0.0010 | 0.0025 | 3.4 |
| G | 0.063 | 0.11 | 1.76 | 0.020 | 0.003 | 0.035 | 1.23 | 0.020 | 0.0080 | 0.0041 | 0.28 | 0.88 | 0.37 | 0.007 | 0.059 | 0.0020 | 0.0005 | 2.5 |
| H | 0.123 | 0.26 | 1.87 | 0.008 | 0.003 | 0.023 | 1.84 | 0.014 | 0.0053 | 0.0018 | 0.33 | | | | | | | 2.6 |
| I | 0.042 | 0.12 | 0.99 | 0.009 | 0.010 | 0.029 | 0.60 | 0.010 | 0.0036 | 0.0022 | | 1.23 | 0.55 | | | | | 2.8 |
| J | 0.116 | 0.29 | 1.93 | 0.011 | 0.001 | 0.026 | 2.05 | 0.015 | 0.0060 | 0.0013 | | | | | 0.005 | | | 2.5 |
| K | 0.028 | 0.12 | 1.03 | 0.008 | 0.001 | 0.032 | 0.76 | 0.010 | 0.0035 | 0.0034 | 0.20 | 0.14 | 0.13 | | 0.030 | 0.0012 | | 2.9 |
| L | 0.161 | 0.19 | 1.46 | 0.009 | 0.001 | 0.039 | 1.00 | 0.014 | 0.0052 | 0.0014 | 0.25 | 0.37 | 0.39 | 0.024 | 0.046 | 0.0011 | | 2.7 |
| M | 0.123 | 0.27 | 1.27 | 0.021 | 0.002 | 0.047 | 0.82 | 0.008 | 0.0030 | 0.0025 | 0.15 | 0.99 | 0.16 | | 0.042 | 0.0027 | | 2.7 |
| N | 0.112 | 0.15 | 1.49 | 0.013 | 0.011 | 0.028 | 0.92 | 0.016 | 0.0049 | 0.0009 | 0.11 | 1.18 | 0.26 | | 0.042 | 0.0014 | | 3.3 |
| O | 0.095 | 0.08 | 1.50 | 0.007 | 0.001 | 0.076 | 0.74 | 0.010 | 0.0042 | 0.0037 | 0.21 | 1.26 | 0.34 | | 0.036 | 0.0014 | | 2.4 |
| P | 0.084 | 0.25 | 1.24 | 0.010 | 0.002 | 0.050 | 0.25 | 0.014 | 0.0047 | 0.0012 | 0.17 | 0.67 | 0.48 | | 0.052 | 0.0009 | 0.0008 | 3.0 |
| Q | 0.144 | 0.23 | 1.01 | 0.011 | 0.001 | 0.037 | 0.86 | 0.009 | 0.0026 | 0.0024 | 0.16 | 1.68 | 0.10 | | | 0.0010 | 0.0016 | 3.5 |
| R | 0.078 | 0.30 | 1.76 | 0.015 | 0.002 | 0.035 | 0.73 | 0.013 | 0.0037 | 0.0036 | 0.22 | 0.74 | 0.65 | | 0.038 | 0.0018 | | 3.5 |
| S | 0.125 | 0.26 | 1.44 | 0.012 | 0.002 | 0.026 | 0.82 | 0.012 | 0.0045 | 0.0018 | 0.28 | 1.13 | 0.33 | | 0.102 | | 0.0016 | 2.7 |
| T | 0.087 | 0.39 | 1.65 | 0.009 | 0.001 | 0.032 | 0.90 | 0.011 | 0.0047 | 0.0043 | 0.30 | 0.96 | 0.45 | | 0.043 | 0.0052 | | 2.3 |
| U | 0.139 | 0.38 | 1.38 | 0.013 | 0.001 | 0.043 | 0.76 | 0.023 | 0.0069 | 0.0017 | 0.13 | 0.76 | 0.20 | 0.018 | 0.037 | 0.0015 | | 3.3 |
| V | 0.126 | 0.26 | 1.42 | 0.011 | 0.001 | 0.037 | 0.70 | 0.020 | 0.0081 | 0.0039 | 0.24 | 1.33 | 0.14 | 0.020 | 0.046 | 0.0008 | | 2.5 |
| W | 0.081 | 0.12 | 1.99 | 0.010 | 0.001 | 0.034 | 1.00 | 0.017 | 0.0050 | 0.0013 | 0.33 | 1.01 | 0.21 | 0.037 | 0.034 | 0.0017 | | 3.4 |
| X | 0.113 | 0.24 | 1.47 | 0.012 | 0.001 | 0.040 | 0.82 | 0.016 | 0.0078 | 0.0026 | 0.21 | 1.00 | 0.31 | | 0.042 | 0.0010 | | 2.1 |
| Y | 0.108 | 0.32 | 2.00 | 0.008 | 0.002 | 0.050 | 0.91 | 0.018 | 0.0026 | 0.0011 | 0.37 | 0.85 | 0.18 | | 0.057 | 0.0015 | | 6.9 |
| Z | 0.140 | 0.50 | 1.56 | 0.017 | 0.005 | 0.032 | 0.66 | 0.009 | 0.0039 | 0.0055 | 0.15 | 0.64 | 0.37 | | | | | 2.3 |
| AA | 0.103 | 0.25 | 1.28 | 0.003 | 0.001 | 0.032 | 0.30 | 0.012 | 0.0036 | 0.0023 | | 0.59 | 0.38 | | 0.041 | 0.0008 | | 3.3 |
| AB | 0.132 | 0.21 | 0.90 | 0.005 | 0.001 | 0.053 | 0.69 | 0.013 | 0.0020 | 0.0016 | | 0.40 | 0.32 | | 0.039 | 0.0011 | 0.0018 | 6.5 |
| AC | 0.030 | 0.12 | 1.95 | 0.006 | 0.002 | 0.068 | 1.52 | 0.012 | 0.0028 | 0.0012 | | | 0.56 | | | 0.0010 | | 4.3 |

| | | | | | | | | | | | | | | | | | | |
|---|---|---|---|---|---|---|---|---|---|---|---|---|---|---|---|---|---|---|
| * Underlining indicates entries outside the scope of the present invention. · The balance other than the above chemical components is Fe and unavoidable impurities. | | | | | | | | | | | | | | | | | | |

**[Table 2]**

| Steel Grade | Chemical Composition (mass%) | | | | | | | | | | | | | | | |
|---|---|---|---|---|---|---|---|---|---|---|---|---|---|---|---|---|
| | C | Mn | P | S | Al | N | O | Si | Cu | Ni | Cr | Mo | Ti | Nb | V | Ca |
| a | 0.090 | 1.49 | 0.005 | 0.001 | 0.018 | 0.0034 | 0.0010 | | | | | | | | | |
| b | 0.085 | 1.46 | 0.008 | 0.002 | 0.053 | 0.0033 | 0.0013 | | | | | | | | | |
| c | 0.128 | 0.71 | 0.018 | 0.001 | 0.032 | 0.0042 | 0.0017 | | | | | | | | | |
| d | 0.086 | 0.22 | 0.010 | 0.004 | 0.029 | 0.0036 | 0.0032 | 0.29 | | | | 0.05 | | | | |
| e | 0.078 | 1.07 | 0.020 | 0.005 | 0.046 | 0.0023 | 0.0021 | | 0.18 | | | | | | 0.009 | |
| f | 0.045 | 0.53 | 0.012 | 0.006 | 0.041 | 0.0029 | 0.0042 | | | 0.28 | | | | | | |
| g | 0.069 | 0.69 | 0.014 | 0.010 | 0.033 | 0.0038 | 0.0039 | | | | 0.05 | | | | | 0.0010 |
| h | 0.103 | 0.44 | 0.015 | 0.005 | 0.066 | 0.0026 | 0.0028 | | | | | | 0.011 | | | |
| i | 0.032 | 0.30 | 0.009 | 0.002 | 0.030 | 0.0049 | 0.0050 | | | | | | | 0.024 | | |
| j | 0.145 | 1.33 | 0.013 | 0.004 | 0.038 | 0.0037 | 0.0023 | | | | | | | | | |
| k | 0.119 | 1.45 | 0.006 | 0.004 | 0.040 | 0.0045 | 0.0016 | | 0.33 | | | | | | | |
| l | 0.128 | 0.97 | 0.014 | 0.005 | 0.051 | 0.0039 | 0.0046 | | | 0.33 | | | | | | |
| m | 0.098 | 1.39 | 0.010 | 0.002 | 0.029 | 0.0028 | 0.0041 | | | | 0.18 | | | | | |
| n | 0.127 | 1.31 | 0.009 | 0.002 | 0.031 | 0.0042 | 0.0032 | | | | | | 0.024 | | | |
| o | 0.124 | 1.35 | 0.011 | 0.002 | 0.035 | 0.0034 | 0.0035 | | | | | | | 0.035 | | |
| p | 0.102 | 1.11 | 0.008 | 0.003 | 0.028 | 0.0033 | 0.0024 | | 0.15 | | | 0.16 | | | | |
| q | 0.095 | 1.48 | 0.012 | 0.002 | 0.042 | 0.0027 | 0.0044 | 0.25 | | | | | | | 0.052 | |
| r | 0.120 | 1.66 | 0.007 | 0.001 | 0.033 | 0.0040 | 0.0018 | | | | | | | | | |
| s | 0.114 | 1.24 | 0.017 | 0.005 | 0.054 | 0.0053 | 0.0039 | | | | | | | | | |
| t | 0.139 | 0.25 | 0.008 | 0.001 | 0.036 | 0.0030 | 0.0019 | | 0.30 | | | | | | 0.050 | |
| u | 0.077 | 1.60 | 0.007 | 0.002 | 0.054 | 0.0033 | 0.0016 | 0.23 | | | | | 0.020 | | | |
| v | 0.087 | 1.44 | 0.006 | 0.001 | 0.044 | 0.0029 | 0.0020 | | | | | | | 0.030 | | 0.0036 |

| | | | | | | | | | | | | | | | | |
|---|---|---|---|---|---|---|---|---|---|---|---|---|---|---|---|---|
| * Underlining indicates entries outside the scope of the present invention. · The balance other than the above chemical components is Fe and unavoidable impurities. | | | | | | | | | | | | | | | | |

Clad steel plates (Nos. 1 to 84) were produced under the production conditions shown in Table 3 using slabs for the raw material of the base metal that had the chemical compositions shown in Table 1 and slabs for the raw material of the cladding metal that had the chemical compositions shown in Table 2. A test plate for a joint was taken from each of the obtained steel plates, and welded joints were produced. The welding method was TTG welding, and multilayer welding was performed from the base metal side toward the cladding metal side.

Slab assembly was carried out by any one of the sandwich method, the open method, and the dummy material method. In Tables 3-1, 3-2, and 3-3, the sandwich method is a method in which a base metal slab, a cladding metal slab, a cladding metal slab, and a base metal slab are stacked in the stated order from the top; the open method is a method in which a cladding metal slab and a base metal slab are stacked in the stated order from the top; and the dummy material method is a method in which a dummy material, a cladding metal slab, and a base metal slab are stacked in the stated order from the top.

The obtained clad steel plates were subjected to evaluation of strength properties and toughness, measurement of Vickers hardness, evaluation of the bonding ratio, and evaluation of ammonia SCC resistance in a liquid ammonia environment. Each test method is as follows.

### [Strength Properties]

Each clad steel plate was reduced in thickness from the cladding metal side, and a No. 1B test specimen specified in JIS Z 2201 was taken from the full thickness of the base metal. The test specimen was then subjected to a tensile test in accordance with the procedure described in JIS Z 2241 (2022), and the yield strength YS (when a yield point was present, the yield point YP (lower yield point YP); when no yield point was present, the 0.2% proof stress σ0.2) and the tensile strength (TS) were measured. The steel plates having a base metal with a tensile strength of 780 MPa or more were evaluated as having good tensile properties.

### [Toughness]

To evaluate the toughness of the base metal of each clad steel plate, a V-notch test specimen specified in JIS Z 2202 was taken such that the 1/2-thickness position of the base metal of the clad steel plate was located at the center in the thickness direction. To evaluate the toughness of the welded joint of each clad steel plate, a V-notch test specimen specified in JIS Z 2202 was taken from a position in a weld heat-affected zone of the base metal of the clad steel plate in the welded joint, the position being centered in the thickness direction at the 1/2-thickness position of the base metal of the clad steel plate. The absorbed energy was measured by subjecting three test specimens for each condition to a Charpy impact test at -50°C for the base metal and at -40°C for the heat-affected zone of the welded joint in accordance with the procedure described in JIS Z 2242 (2023). The steel plates or welded joints for which the absorbed energies of all three test specimens were 47 J or more were evaluated as having good toughness. In Tables 3-1, 3-2, and 3-3, the smallest value among the absorbed energies of the three test specimens is shown.

### [Vickers Hardness]

A sample was taken such that a cross section perpendicular to the welding direction of a welded joint served as a measurement surface, and the sample was then mirror-polished. Next, in accordance with JIS Z 2244 (2020), the hardness of a non-heat-affected zone and a weld heat-affected zone of the cladding metal was measured at 20 points each at positions 1.0 mm and 2.0 mm below the surface of the steel plate by using a Vickers hardness tester, and the maximum hardness of each of the non-heat-affected zone and the weld heat-affected zone of the cladding metal was determined and defined as the maximum hardness. In a cladding metal having a thickness of less than 3.0 mm, the hardness of each of the non-heat-affected zone and the weld heat-affected zone of the cladding metal was measured at 20 points each only at a position 1.0 mm below the surface of the steel plate by using a Vickers hardness tester, and the maximum hardness of each of the non-heat-affected zone and the weld heat-affected zone of the cladding metal was determined and defined as the maximum hardness.

### [Bonding Ratio]

The bonding ratio at the bonding interface of each clad steel plate was determined as follows. Specifically, a cross section including the base metal and the cladding metal of each clad steel plate was mirror-polished, and ten fields of view each including a region having a length of 1.0 × 10⁻¹ mm in a direction along a randomly selected interface in the cross section were observed at a magnification of 1000 times using a scanning electron microscope (SEM). The bonding interface length was determined by image analysis. The bonding ratio was then determined using the following formula based on the total measurement length and the bonding interface length. Bonding ratio (%): 100 × bonding interface length (mm)/total measurement length (mm)

The bonding interface length is a total length of portions determined, as a result of image analysis, to have neither voids nor oxides present at the interface. The steel plates having a bonding ratio of 70% or more were evaluated as having good bondability.

### [Ammonia SCC Resistance]

The ammonia SCC resistance in the present invention was evaluated by applying a potential to a test specimen to which stress was applied by four-point bending in a test solution.

Specifically, the test specimen was evaluated according to the following procedure.

The clad steel plate according to the present invention is used such that the cladding metal comes into contact with ammonia or the like. Therefore, first, a test specimen measuring 1.5 to 3.0 mm in thickness × 15 mm × 115 mm was taken from a cladding metal portion by subjecting the clad steel plate to thickness reduction machining from the base metal side. When the cladding metal had a thickness of more than 3.0 mm, a test specimen having a thickness of 3.0 mm was taken from a surface of the cladding metal the surface of which was not bonded to the base metal. The obtained test specimen was subjected to ultrasonic degreasing in acetone for 5 minutes. A stress equivalent to 100% of the yield strength YS of the base metal corresponding to each test specimen was applied to the corresponding test specimen by four-point bending. The test specimen subjected to four-point bending was placed in a test cell. Subsequently, the test cell was filled with a solution prepared by mixing 2 L of liquid ammonia having a purity of 99.999% or more with ammonium carbamate: 5.00 mass%, O₂: 1.000 bar, and water: 0.10 mass%. Specifically, predetermined amounts of ammonium carbamate and water were placed in the test cell, O₂ gas was further blown into the test cell, and then liquid ammonia was placed in the test cell. The solution volume to specimen area ratio, which is the ratio of the volume of the immersion liquid to the surface area of the immersion test specimen, was 42 mL/cm². Stirring during the test was continuously performed at 10 rpm using a stirrer placed in the test cell. The temperature of the test liquid was set to 25°C. After the temperature of the test liquid was adjusted to 25°C, the corrosion potential of the test specimen was measured using a potentiostat. Measurement of the potential and application of the potential using the potentiostat were performed by a three-electrode method, and platinum electrodes were used as both a reference electrode and a counter electrode. When one hour had elapsed from the start of measurement of the corrosion potential, the potential was determined to have stabilized, and, at that time, the potential applied to the test specimen was controlled to be +0.5 V vs. Pt, and the immersion test was started. After 504 hours had elapsed from the start of the immersion test, the test specimen was taken out of the test cell. Corrosion products on the surface of the test specimen were removed, and cracking was visually observed on the surface and in the cross section of the specimen to evaluate cracking. In Examples, nine test specimens were used for each condition in the 504 hour-immersion test. When cracks having a depth of 1.5 mm or more were observed in two or fewer test specimens among the nine test specimens, ammonia SCC resistance was determined to be good (∘); when such cracks occurred in three or more test specimens, ammonia SCC resistance was determined to be poor (×).

The obtained evaluation results are also shown in Table 3-1, Table 3-2, and Table 3-3.

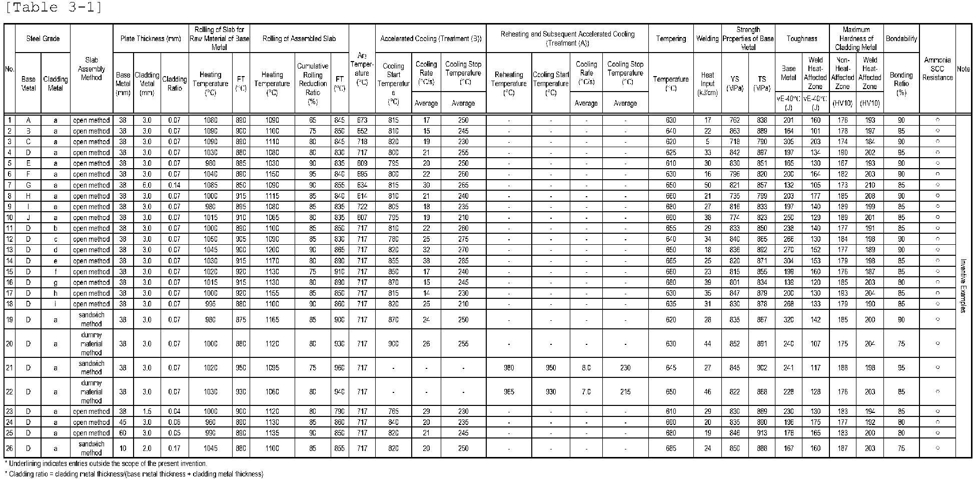

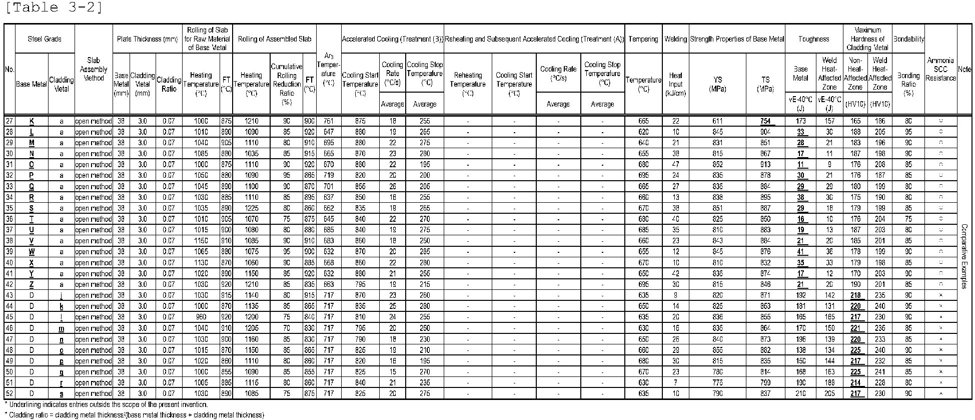

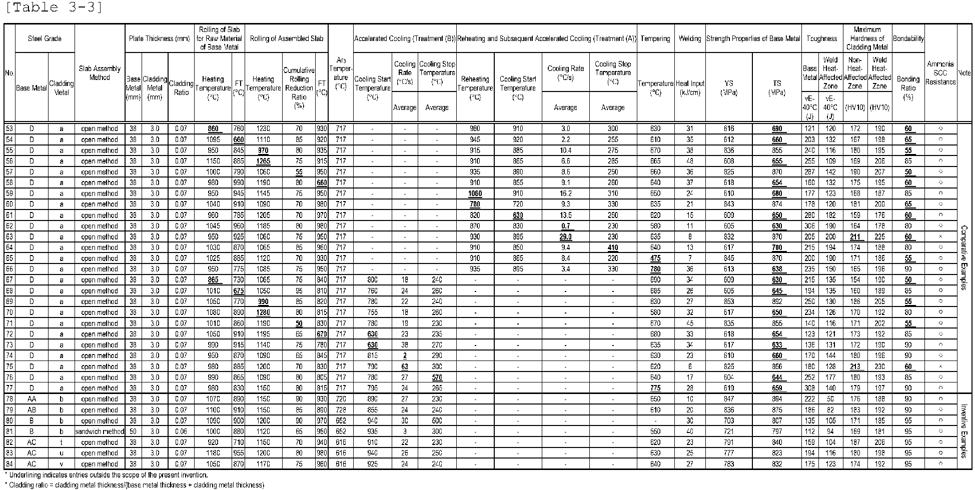

Table 3-1, Table 3-2, and Table 3-3 indicate that, in all of Inventive Examples Nos. 1 to 26 and Nos. 78 to 84, the tensile strength is 780 MPa or more, the absorbed energy is 47 J or more in the Charpy impact test at -40°C, the maximum hardness is 210 HV or less, and the bonding ratio between the base metal and the cladding metal is 70% or more. In addition, all of Inventive Examples are found to have high ammonia SCC resistance.

Nos. 27 to 52 have chemical compositions outside the scope of the present invention and therefore are inferior in at least one of tensile strength TS, low-temperature toughness, hardness, and ammonia SCC resistance.

Nos. 53 to 77 have chemical compositions within the scope of the present invention but are produced under production conditions outside the scope of the present invention; therefore, Nos. 53 to 77 are inferior in at least one of tensile strength TS, hardness, bonding ratio, and ammonia SCC resistance.

## Claims

1. A clad steel plate comprising a cladding metal on at least one surface of a base metal,
wherein the base metal has a chemical composition containing:
in mass%,
C: 0.030% to 0.150%,
Si: 0.05% to 0.55%,
Mn: 0.50% to 2.10%,
P: 0.020% or less,
S: 0.010% or less,
Al: 0.018% to 0.070%,
Ni: 0.30% to 2.20%,
Ti: 0.005% to 0.020%,
N: 0.0020% to 0.0080%, and
O (oxygen): 0.0050% or less,
with Ti/N being 2.2 or more and 6.5 or less, and
the base metal further containing one or two or more selected from:
Cu: 0.50% or less,
Cr: 1.60% or less,
Mo: 0.60% or less,
Nb: 0.030% or less,
V: 0.100% or less,
B: 0.0050% or less, and
Ca: 0.0040% or less,
with the balance being Fe and unavoidable impurities; and
the cladding metal has a chemical composition containing: in mass%,
C: 0.030% to 0.140%,
Mn: 0.20% to 1.60%,
P: 0.020% or less,
S: 0.010% or less,
Al: 0.018% to 0.070%,
N: 0.0020% to 0.0050%, and
O (oxygen): 0.0050% or less,
with the balance being Fe and unavoidable impurities; and
the base metal has a tensile strength of 780 MPa or more,
the base metal has an absorbed energy of 47 J or more in a Charpy impact test at -40°C,
the cladding metal has a maximum hardness of 210 HV or less, and
a bonding ratio between the base metal and the cladding metal is 70% or more.

2. The clad steel plate according to Claim 1, wherein the chemical composition of the cladding metal further contains:
in mass%,
one or two or more selected from:
Si: 0.55% or less,
Cu: 0.30% or less,
Ni: 0.30% or less,
Cr: 0.10% or less,
Mo: 0.10% or less,
Ti: 0.020% or less,
Nb: 0.030% or less,
V: 0.050% or less, and
Ca: 0.0040% or less.

3. A welded joint comprising the clad steel plate according to Claim 1 or 2,
wherein a weld heat-affected zone has an absorbed energy of 47 J or more in a Charpy impact test at -40°C, and
a weld heat-affected zone of the cladding metal has a maximum hardness of 210 HV or less.

4. A method for producing the clad steel plate according to Claim 1 or 2, the method comprising:
heating a slab for the raw material of the base metal to a surface temperature of 900°C or more and 1200°C or less, and then hot-rolling the heated slab for the raw material of the base metal at a rolling finish temperature of 700°C or more in terms of surface temperature to obtain a raw material of base metal;
heating a slab for the raw material of the cladding metal and then hot-rolling the heated slab for the raw material of the cladding metal to obtain a raw material of cladding metal;
heating, to a surface temperature of 1000°C or more and 1250°C or less, an assembled slab obtained by stacking the raw material of the base metal and the raw material of the cladding metal;
then hot-rolling the heated assembled slab at a cumulative rolling reduction ratio of 60% or more and at a rolling finish temperature equal to or higher than the Ar₃ transformation temperature and equal to or lower than 1000°C to produce a rolled plate including the base metal and the cladding metal; and
performing a treatment (A) or (B) below on the rolled plate:
(A) cooling the rolled plate after hot rolling,
then reheating the rolled plate to 800°C or more and 1000°C or less,
subjecting the rolled plate to accelerated cooling from a temperature equal to or higher than the Ar₃ transformation temperature of the base metal to a cooling stop temperature of 350°C or less at an average cooling rate in a range of 1.0°C/s or more and 20.0°C/s or less, and
then tempering the rolled plate at a temperature of 550°C or more and 700°C or less after the accelerated cooling; or
(B) subjecting the rolled plate after hot rolling to accelerated cooling from a temperature equal to or higher than the Ar₃ transformation temperature of the base metal to a cooling stop temperature of 500°C or less at an average cooling rate in a range of 3°C/s or more and 50°C/s or less, with or without subsequent tempering the rolled plate at a temperature of 700°C or less.

5. A welded joint production method for producing a welded joint by performing welding using the clad steel plate according to Claim 1 or 2 under a condition of a heat input of 50 kJ/cm or less.
